# EUROPÄISCHE PATENTSCHRIFT

(11) **EP 3 136 124 B1**
(45) Veröffentlichungstag und Bekanntmachung des Hinweises auf die Patenterteilung: **09.09.2020**
(21) Anmeldenummer: 16179733.7
(22) Anmeldetag: 15.07.2016
(51) Int. Cl.: G01S 7/40, G01S 13/87, G01S 13/931, G01S 13/02

(54) **VERFAHREN ZUM BETRIEB VON RADARSENSOREN IN EINEM KRAFTFAHRZEUG UND KRAFTFAHRZEUG**
METHOD FOR OPERATING RADAR SENSORS IN A MOTOR VEHICLE AND MOTOR VEHICLE
PROCÉDÉ POUR METTRE EN SERVICE DES CAPTEURS RADAR DANS UN VÉHICULE À MOTEUR ET VÉHICULE À MOTEUR

(30) Priorität: 22.08.2015 DE 102015011022
(43) Veröffentlichungstag der Anmeldung: 01.03.2017
(73) Patentinhaber: AUDI AG, 85045 Ingolstadt (DE)
(72) Erfinder: KHLIFI, Rachid, 85748 Garching (DE)

(56) Entgegenhaltungen:
- WO-A1-2016/087010
- DE-A1-102014 009 869

## Beschreibung

Die Erfindung betrifft ein Verfahren zum Betrieb von Radarsensoren in einem Kraftfahrzeug, wobei die Radarsensoren an unterschiedlichen Einbaupositionen in dem Kraftfahrzeug verbaut sind, sowie ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Häufig werden mehrere Radarsensoren in Kraftfahrzeugen benutzt, wobei es bevorzugt ist, diese verdeckt an verschiedenen Einbaupositionen im Kraftfahrzeug unterzubringen, beispielsweise innerhalb von Türen hinter einem für Radarstrahlen durchlässigen Fenster oder innerhalb von Stoßfängern. Ferner wird die Befestigung von Radarsensoren meist bereits im Vorfeld bei der Auslegung von Stoßfängern für Kraftfahrzeuge berücksichtigt. Bereits in einer sehr frühen Entwicklungsphase werden die Radarsensoren platziert, das bedeutet, ihre Einbaupositionen festgelegt. Dabei basiert die Platzierung der Radarsensoren beispielsweise auf Erfahrungswerten aus der Vergangenheit und/oder Einbaurichtlinien der Lieferanten der Radarsensoren. Erst bei der tatsächlichen Montage der Radarsensoren im Kraftfahrzeug bzw. konkret im Stoßfänger werden die Auswirkungen der Einbauposition messbar.

Ausgehend von einer gleichen Hardware und Software bei der Radarsensoren können die Einbauumgebungen an den Einbaupositionen der Radarsensoren die Leistungsfähigkeit des jeweiligen Radarsensors beeinträchtigen. Mithin kann bei Beibehaltung der gleichen Konfiguration für alle Radarsensoren die Leistungsfähigkeit nicht über alle Radarsensoren, die verteilt im Kraftfahrzeug an verschiedenen Einbaupositionen verbaut werden, gewährleistet werden, da die Einbaubedingungen unterschiedlich sind. Faktoren, die die Funktionsweise des Radarsensors beeinträchtigen können, sind beispielsweise die relativen Einbauwinkel Azimut/Elevation des Radarsensors zum Stoßfänger, Rippen oder Diskontinuitäten im Abstrahlbereich der Antennenanordnung, metallische Strukturen in der Einbauumgebung des Radarsensors, die Einbauhöhe relativ zum Boden/Untergrund und dergleichen.

Mithin wurde vorgeschlagen, all diese Faktoren bereits von vorneherein für den Radarsensor zu berücksichtigen, beispielsweise, indem für jeden Radarsensor eine spezielle Ausgestaltung der Software im Radarsensor vorgenommen wird. Das hat zur Folge, dass sich Radarsensoren unterschiedlicher Einbaupositionen in ihrer konkreten Ausgestaltung unterscheiden, mithin unterschiedliche Teile sind und somit auch unterschiedliche Teilenummern aufweisen. Das Handling dieser unterschiedlichen Varianten von Radarsensoren ist äußerst komplex, aufwandsintensiv und teuer. Insbesondere muss immer sichergestellt werden, dass beim Austausch der Radarsensoren, beispielsweise aufgrund einer Beschädigung, immer die Radarsensoren mit der richtigen Ausgestaltung der Software verbaut sind oder dass die Radarsensoren entsprechend geflasht werden. Dies generiert einen weiteren Steuerungsaufwand.

Die nachveröffentlichte WO 2016/087010 A1 offenbart ein Verfahren zum Konfigurieren wenigstens eines an einer von mehreren Einbaupositionen in einem Kraftfahrzeug verbauten Radarsensors hinsichtlich der Einbauposition und ein Kraftfahrzeug. Dort werden Identifikationsstrukturen durch einen Radarsensor erfassbar vorgesehen, welche in den Radardaten erkannt werden können, so dass insbesondere ein Steuergerät eine geeignete Konfiguration des Sensors vornehmen kann. Unter einer einbaupositionspezifischen Konfiguration wird hierbei konkret eine Umrechnung von detektierten Objektinformationen in das Fahrzeugkoordinatensystem verstanden.

Der Erfindung liegt daher die Aufgabe zugrunde, eine einfachere Berücksichtigung unterschiedlicher Einbaupositionen in einem Kraftfahrzeug für Radarsensoren zu ermöglichen, insbesondere unter Verwendung gleich ausgebildeter Radarsensoren für alle Einbaupositionen.

Zur Lösung dieser Aufgabe sind bei einem Verfahren der eingangs genannten Art erfindungsgemäß die Merkmale des Anspruchs 1 vorgesehen.

Erfindungsgemäß wird mithin vorgeschlagen, einbaupositionsspezifische Konfigurationsparameter und/oder Betriebssoftware einmalig in einem zentralen Steuergerät, beispielsweise einem Steuergerät eines zentralen Fahrerassistenzsystems, abzulegen, wobei die einzelnen Radarsensoren beim Verbau oder beim Austausch die entsprechende Konfigurationsinformation von dem Steuergerät zugewiesen bekommen. Auf diese Weise kann gewährleistet werden, dass die Radarsensoren mit den richtigem Konfigurationsparametern bzw. mit der richtigen Betriebssoftware betrieben werden. Ausgehend von einem ursprünglich einheitlichen Software-/ Parameterstand der Radarsensoren ist die Steuerung und Komplexität beim Einbau eines Radarsensors äußerst gering. Zudem ist das Risiko, dass die Radarsensoren falsch verbaut werden, ebenso äußerst gering, da alle Radarsensoren in allen Einbaulagen des Kraftfahrzeugs verbaut werden können. Das bedeutet, insbesondere kann vorgesehen sein, dass Radarsensoren verwendet werden, die vor der Konfiguration alle gleich ausgebildet sind, insbesondere hinsichtlich der Softwarebestandteile.

Beim Einbau eines neuen Radarsensors werden mithin die einbaupositionsspezifischen Konfigurationsinformationen an den neu eingebauten Radarsensor kommuniziert, wodurch gewährleistet ist, dass der Radarsensor für die spezifische Einbauposition die optimale Leistungsfähigkeit liefert. Auf diese Art und Weise kann die Anzahl der Software-Varianten reduziert werden. Jeder Radarsensor ist zu Beginn mit der gleichen Softwareausgestaltung (Grundsoftware) versehen, wobei die Radarsensoren nach Einbau durch die Konfigurationsinformation je nach Einbauposition aktualisiert werden, insbesondere auch durch einen Flashvorgang. Mithin ist es vorteilhaft möglich, statt je nach Einbauposition unterschiedlichen Radarsensoren, also unterschiedlichen Teilen, nur eine einzige Art von Radarsensoren grundsätzlich bereitzuhalten. Mithin sind der Steuerungsaufwand und die Komplexität in einem Radarsystem deutlich reduziert. Das Risiko vom Falschverbau beim Austausch fällt weg. Mischverbau wird ohne Weiteres ermöglicht. Nachdem die Radarsensoren die einbaupositionsspezifische Konfigurationsinformation erhalten und verwenden können, ohne die gesamte Betriebssoftware des Radarsensors grundsätzlich zu verändern, ist weniger Absicherungsaufwand hinsichtlich der softwaretechnischen Ausgestaltung der Radarsensoren gegeben. Der Aufwand in der Produktion und in externen Werkstätten ist reduziert, da keine spezielle Ausrüstung erforderlich ist.

Insbesondere kann vorgesehen sein, dass die Radarsensoren zumindest teilweise hinter einem zu durchstrahlenden Bauteil des Kraftfahrzeugs, insbesondere in einem Stoßfänger oder in einer Tür verbaut werden und/oder die insbesondere acht Radarsensoren Teil eines die Umgebung des Kraftfahrzeugs in einem 360°-Winkelbereich erfassenden Radarsystems sind. Gerade dann, wenn Radarsensoren verdeckt hinter Bauteilen des Kraftfahrzeugs vorgesehen sind, ergeben sich je nach Einbauposition unterschiedliche Umgebungsbedingungen, die beispielsweise durch die spezielle Ausgestaltung der zu durchstrahlenden Bauteile gegeben sind. Dabei sei jedoch angemerkt, dass auch andere Umgebungseinflüsse auf die Leistungsfähigkeit der Radarsensoren existieren können, beispielsweise was die Nebenkeulen bei Betrieb des Radarsensors angeht, in die auch eine Radarstrahlung abgegeben wird. Derartige spezielle Umgebungseigenschaften an Einbaupositionen können im Rahmen der vorliegenden Erfindung nun berücksichtigt werden, worauf im Folgenden noch näher eingegangen werden wird.

Die Radarsensoren können zudem Teil eines Radarsystems sein, das wenigstens acht Radarsensoren umfasst und die Umgebung des Kraftfahrzeugs in einem 360°-Radius überwacht. Dabei können beispielsweise jeweils drei Radarsensoren in den vorderen und hinteren Stoßfängern des Kraftfahrzeugs verbaut sein, während zwei weitere Radarsensoren in seitlichen Türen des Kraftfahrzeugs verdeckt verbaut sind, beispielsweise hinter einem in das Türblech eingelassenen, radardurchlässigen Fenster.

Die Konfigurationsinformation kann Kalibrierungsdaten, insbesondere bezüglich der Einbauposition und/oder einer Transformation zwischen einem Koordinatensystem des Radarsensors und einem Koordinatensystem des Kraftfahrzeugs, umfassen. Es ist also möglich, bestimmte Kalibrierungswerte, die durch die Einbauposition vorgegeben sind, dem Radarsensor zur Verfügung zu stellen. Auf diese Weise wird insgesamt der Kalibrierungsvorgang vereinfacht.

Gemäß der vorliegenden Erfindung ist vorgesehen, dass als Konfigurationsinformation die Einbauumgebung betreffende Anpassungen des Messvorgangs beschreibende Betriebsparameter verwendet werden. In dieser Ausgestaltung können mithin konkrete, an einer Einbauposition gegebene Umgebungseigenschaften explizit berücksichtigt werden. Nachdem die Einbauposition meist bereits lange vorgeplant ist, mithin beispielsweise Eigenschaften zu durchstrahlender Bauteile oder sonstiger Bauteile im Bereich der Einbauposition vorbekannt sind, kann mithin der Betrieb des Radarsensors so auf diese Umgebungseigenschaften eingestellt werden, dass die maximale Leistungsfähigkeit des Radarsensors gegeben ist.

So werden Eigenschaften eines beim Messvorgang zu durchstrahlenden und/oder von Nebenradarkeulen erfassten Bauteils des Kraftfahrzeugs berücksichtigende Betriebsparameter verwendet. Beispielsweise kann die zu durchstrahlende Dicke des Bauteils und ihre Schwächungswirkung berücksichtigt werden, was auch für Diskontinuitäten und dergleichen gelten kann, beispielsweise Rippen im Profil eines Stoßfängers und dergleichen. Auch störende Einflüsse, beispielsweise metallische Objekte im Umfeld des Radarsensors sind vorbekannt und können beim Betrieb des Radarsensors geeignet berücksichtigt werden. Dabei kann sich die Anpassung des Betriebs auf Eigenschaften von Bauteilen im Umfeld des Kraftfahrzeugs oder allgemein die Berücksichtigung der Einbauumgebung neben Sendeparametern auch auf Auswertungsparameter beziehen, insbesondere auch konkret zur Auswertung verwendete Algorithmen und dergleichen.

So wird das Vorwissen über die Einbauposition und ihre Einbauumgebung optimal genutzt, um die maximale Leistungsfähigkeit des Radarsensors zu erlauben.

Denkbar ist es selbstverständlich auch, dass den gewünschten Erfassungsbereich an der Einbauposition beschreibende Betriebsparameter verwendet werden. Abhängig von der Einbauumgebung, aber auch allgemein von der Einbauposition, können unterschiedliche Erfassungsbereiche gewünscht sein, insbesondere, wenn bekannt ist, dass beispielsweise aufgrund die Messung störender Objekte/Bauteile ein schmalerer Erfassungsbereich zweckmäßig sein könnte, jedoch ein anderer Radarsensor die wegfallenden Teile abdeckt und dergleichen.

Konkret ist erfindungsgemäß vorgesehen, dass als Betriebsparameter wenigstens ein eine Detektionsschwelle beschreibender Auswertungsparameter und/oder wenigstens ein auf eine Nachverfolgung eines Objekts bezogener Nachverfolgungsparameter und/oder wenigstens ein auf eine Überwachung einer Dejustage bezogener Dejustageparameter und/oder wenigstens ein auf eine schnelle Fourier-Transformation bezogener Auswertungsparameter und/oder wenigstens ein die Anzahl der Chirps und/oder die Frequenzbandbreite beschreibender Sendeparameter verwendet werden. Selbstverständlich sind neben den hier genannten Beispielen auch eine Vielzahl anderer Betriebsparameter denkbar, die abhängig von der Einbauumgebung gewählt werden können, beispielsweise solche, die bestimmte Betriebsmodi aktivieren, um variable Erfassungsbereiche beliebiger Form zu ermöglichen und dergleichen.

Neben dem Verfahren betrifft die Erfindung auch ein Kraftfahrzeug, umfassend ein Radarsystem mit mehreren Radarsensoren, die an unterschiedlichen Einbaupositionen in dem Kraftfahrzeug verbaut sind, und einem Steuergerät, das zur Durchführung des erfindungsgemäßen Verfahrens ausgebildet ist. Sämtliche Ausführungen zu dem erfindungsgemäßen Verfahren können analog auf das erfindungsgemäße Kraftfahrzeug übertragen werden, so dass auch mit diesem die bereits genannten Vorteile erhalten werden können.

Es sei an dieser Stelle noch angemerkt, dass im Rahmen der vorliegenden Erfindung bevorzugt Radarsensoren auf Halbleiterbasis verwendet werden, insbesondere solche auf CMOS-Basis, da diese, wie eingangs bereits dargelegt, äußerst kleinbauend realisiert werden können und sich besonders eignen, verdeckt im Kraftfahrzeug verbaut zu werden. Die durch derartige Radarsensoren gegebene Genauigkeit kann besonders gut ausgenutzt werden, wenn durch geeignete Konfigurationen die bestmögliche Leistungsfähigkeit gegeben ist. Insbesondere kann der Radarsensor also einen durch einen Halbleiterchip realisierten Radartransceiver aufweisen, wobei der Halbleiterchip insbesondere ein CMOS-Chip ist. Zusätzlich kann durch den Halbleiterchip auch eine Steuereinheit des Radarsensors und/oder eine digitale Signalverarbeitungskomponente realisiert werden, wobei diese beiden Elemente besonders geeignet sind, um die Betriebssoftware umzusetzen und Betriebsparameter unter den Konfigurationsparametern umzusetzen. Der Halbleiterchip und eine Antennenanordnung des Radarsensors können als ein Package realisiert werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug, und
- Fig. 2: einen in einem Stoßfänger verbauten Radarsensor.

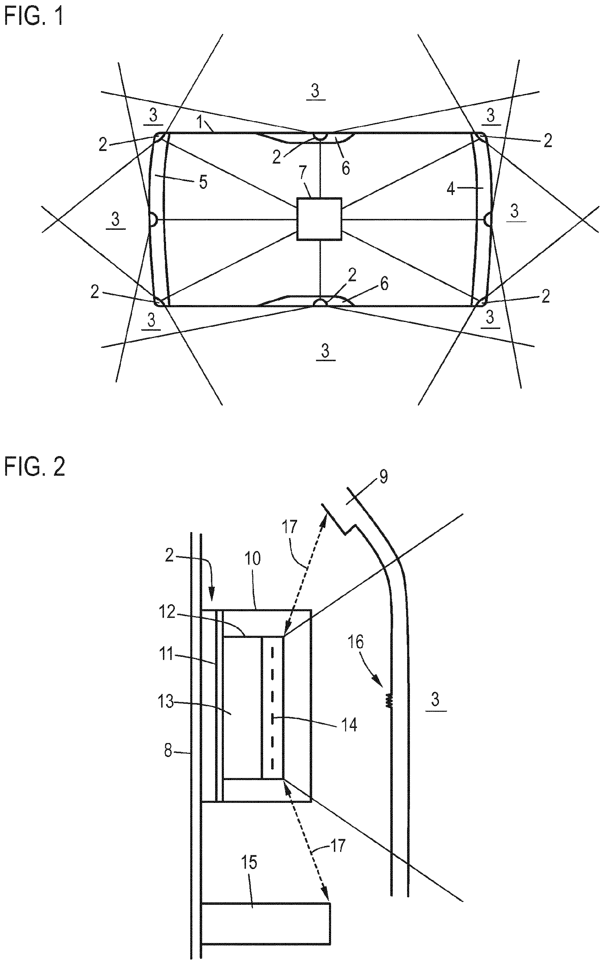

Fig. 1 zeigt eine Prinzipskizze eines erfindungsgemäßen Kraftfahrzeugs 1, mit dem eine Umgebungserfassung durch Radarsensoren 2 eines Radarsystems in einem 360°-Winkelbereich um das Kraftfahrzeug 1 möglich ist, wie durch die angedeuteten Erfassungsbereiche 3 visualisiert. Die drei vorderen Radarsensoren 2 sind in einem vorderen Stoßfänger 4, die drei hinteren Radarsensoren 2 in einem hinteren Stoßfänger 5 verbaut. Die seitlichen Radarsensoren 2 sind in Türen 6 des Kraftfahrzeugs 1 vorgesehen, wobei in dem Türblech ein überlackiertes radardurchlässiges Fenster vorgesehen ist. Die Radarsensoren 2 sind in CMOS-Technologie äußerst kleinbauend realisiert.

Dem Radarsystem zugeordnet ist vorliegend auch ein zentrales Steuergerät 7, welches vorliegend auch als Steuergerät eines zentralen Fahrerassistenzsystems dient, in dem die Umfelddaten aller Umgebungssensoren, also auch der Radarsensoren 2, gesammelt und als ein Umgebungsmodell zusammengefasst werden, welches genutzt wird, um verschiedene Funktionen verschiedener Fahrerassistenzsysteme umzusetzen. Insbesondere ist das hier dargestellte Radarsystem mit den Radarsensoren 2 und dem Steuergerät 7 zur Durchführung des erfindungsgemäßen Verfahrens ausgebildet.

Die Radarsensoren 2 werden ersichtlich alle an unterschiedlichen Einbaupositionen im Kraftfahrzeug klar definiert verbaut. Ihre Ausrichtung und ihre Einbauumgebung sind mithin, zumindest größtenteils, bereits bei der Auslegung des Kraftfahrzeugs 1 bekannt. Dies wird ausgenutzt, indem in dem Steuergerät 7 für jede Einbauposition eine einbauspezifische Konfigurationsinformation hinterlegt ist, die Betriebssoftware und/oder Konfigurationsparameter für an der entsprechenden Einbauposition verbaute Radarsensoren 2 enthält. Das bedeutet also, die Radarsensoren 2 sind zum Zeitpunkt des Einbaus allesamt gleich ausgebildet, sowohl was die Hardware- als auch die Softwareausgestaltung angeht. Nach Verbau des entsprechenden Radarsensors 2 meldet sich dieser über eine entsprechende Kommunikationsverbindung bei dem Steuergerät 7 an, welches dann auch die Einbauposition des Radarsensors 2 kennt. Verfahren zur Ermittlung der Einbauposition bzw. zur Identifizierung von Radarsensoren 2 sind bereits bekannt und können auch hier eingesetzt werden, sei es durch Verwendung dedizierter Verbindungen zu jedem Radarsensor 2 oder aber durch eine Kodierung der Einbauposition über radarsensorinterne oder radarsensorexterne Vorrichtungen, Testmessungen und dergleichen.

Das Steuergerät 7 übermittelt dann die der Einbauposition zugeordnete Konfigurationsinformation an den entsprechenden Radarsensor 2 zurück, welcher diese nutzt, um sich entsprechend zu konfigurieren, mithin beispielsweise Betriebssoftware geeignet installiert und/oder die Konfigurationsparameter, welche insbesondere Betriebsparameter sind, entsprechend umsetzt.

Die Konfigurationsinformation umfasst dabei neben Kalibrierungsdaten, die bevorzugt eine Transformation zwischen einem Koordinatensystem des Radarsensors 2 und einem Koordinatensystem des Kraftfahrzeugs 1 beschreiben, die Einbauumgebung betreffende Anpassungen des Messvorgangs beschreibende Betriebsparameter. Dabei werden beispielsweise von dem Radarsensor zu durchstrahlende Bauteile und/oder die Messung anderweitig beeinflussende Bauteile berücksichtigt, um eine optimale Leistungsfähigkeit der Radarsensoren 2 an der Einbauposition zu erreichen. Die Betriebsparameter können dabei beispielsweise Sendeparameter, insbesondere die Anzahl der Chirps und die Frequenzbandbreite, sowie Auswertungsparameter, insbesondere also Parameter einer schnellen Fourier-Transformation, Nachverfolgungsparameter, die Nachverfolgungsalgorithmen parametrieren oder zur Auswahl von Nachverfolgungsalgorithmen genutzt werden, Dejustageparameter, die sich auf Dejustageerkennungsalgorithmen beziehen, Schwellwerte zur Detektion und dergleichen mehr umfassen.

Auch bei einem Austausch von Radarsensoren 2 kann, nachdem die Konfigurationsinformation ja im zentralen Steuergerät 7 gespeichert ist, ohne großen Aufwand eine geeignete Konfiguration für die Einbauposition erfolgen.

In einem Beispiel können für eine Einbauposition "vorne Mitte" als Inhalt der Konfigurationsinformation ein Kalibrierwert von 0.5°, Detektionsschwellwert von 0,5°, ein Detektionsschwellwert von 2,5 Dezibel, Multi-Objekt-Tracking als Nachverfolgungshypothese, ein Partikelfilter als Nachverfolgungsalgorithmus, eine Frequenzbandbreite von 4 GHz etc. festgelegt sein.

Betriebsparameter beziehen sich dabei insbesondere auf die Einbauumgebung des Radarsensors 2 an der Einbauposition, wie durch Fig. 2 nochmals genauer erläutert werden soll. Gezeigt ist dort schematisch ein in einem Stoßfänger 4, 5 mit einem Stoßfänger-Basisteil 8 und einem Stoßfänger-Schließteil 9 verbauter Radarsensor 2, der vorliegend eine in einem Gehäuse 10 gehalterte Leiterplatte 11 aufweist, auf der ein Package 12 aus einem CMOS-Chip 13 und einer Antennenanordnung 14 angeordnet ist. Durch den CMOS-Chip 13 werden neben einem Radartransceiver auch eine Steuereinheit und eine digitale Signalverarbeitungskomponente des Radarsensors 2 realisiert.

Ersichtlich ist der Erfassungsbereich 3 des Radarsensors 2 einbaupositionsspezifisch bereits so gewählt, dass möglichst wenig störende Einflüsse durch das Stoßfänger-Schließteil 4 und sonstige Bauteile, wie beispielsweise das metallische Bauteil 15, auftreten.

Nichtsdestotrotz muss das Stoßfänger-Schließteil 9 als zu durchstrahlendes Bauteil durchstrahlt werden und hat daher bereits eine gewisse Schwächungswirkung, die in Sendeparametern und/oder Auswertungsparametern entsprechend berücksichtigt werden kann. An einer Stelle 16 weist das Stoßfänger-Schließteil 9 zudem eine Diskontinuität in Form von Rippen auf, die ungewollte Reflektionen liefern können. Auch derartige Effekte können berücksichtigt werden, wenn optimale Betriebsparameter für den Radarsensor 2 ermittelt werden. Auch in Nebenkeulen auftretende Reflektionseffekte an dem Bauteil 15 und dem Stoßfänger-Schließteil 9 werden, wie gemäß der Pfeile 17 angedeutet, berücksichtigt. Insofern erlauben es die Betriebsparameter der Konfigurationsinformation also, den Radarsensor 2 ideal auf seine Einbauposition und die dort gegebene Einbauumgebung abgestimmt zu betreiben.

## Patentansprüche

1. Verfahren zum Betrieb von Radarsensoren (2) in einem Kraftfahrzeug (1), wobei die Radarsensoren (2) an unterschiedlichen Einbaupositionen in dem Kraftfahrzeug (1) verbaut sind,
**dadurch gekennzeichnet,**
**dass** nach dem Einbau eines Radarsensors (2) an einer Einbauposition eine Betriebssoftware und/oder Konfigurationsparameter umfassende Konfigurationsinformation von einem mit den Radarsensoren (2) kommunizierenden, zentralen Steuergerät (7) an den Radarsensor (2) übermittelt und dort zur Konfiguration des Radarsensors (2) verwendet wird, wonach der Radarsensor (2) gemäß der Konfigurationsinformation betrieben wird, wobei als Konfigurationsinformation die Einbauumgebung betreffende Anpassungen des Messvorgangs beschreibende Betriebsparameter verwendet werden, wobei Eigenschaften eines beim Messvorgang zu durchstrahlenden und/oder von Nebenradarkeulen erfassten Bauteils (15) des Kraftfahrzeugs (1) berücksichtigende Betriebsparameter verwendet werden, wobei als Betriebsparameter wenigstens ein eine Detektionsschwelle beschreibender Auswertungsparameter und/oder wenigstens ein auf eine Nachverfolgung eines Objekts bezogener Nachverfolgungsparameter und/oder wenigstens ein auf eine Überwachung einer Dejustage bezogener Dejustageparameter und/oder wenigstens ein auf eine schnelle Fourier-Transformation bezogener Auswertungsparameter und/oder wenigstens ein die Anzahl der Chirps und/oder die Frequenzbandbreite beschreibender Sendeparameter verwendet werden.

2. Verfahren nach Anspruch 1,
**dadurch gekennzeichnet,**
**dass** die Radarsensoren (2) zumindest teilweise hinter einem zu durchstrahlenden Bauteil des Kraftfahrzeugs (1), insbesondere in einem Stoßfänger (4, 5) oder in einer Tür (6), verbaut werden und/oder die insbesondere acht Radarsensoren (2) Teil eines die Umgebung des Kraftfahrzeugs (1) in einem 360°-Winkelbereich erfassenden Radarsystems sind.

3. Verfahren nach Anspruch 1 oder 2,
**dadurch gekennzeichnet,**
**dass** die Konfigurationsinformation Kalibrierungsdaten, insbesondere bezüglich der Einbauposition und/oder einer Transformation zwischen einem Koordinatensystem des Radarsensors (2) und einem Koordinatensystem des Kraftfahrzeugs (1), umfassen.

4. Verfahren nach einem der vorangehenden Ansprüche,
**dadurch gekennzeichnet,**
**dass** den gewünschten Erfassungsbereich (3) an der Einbauposition beschreibende Betriebsparameter verwendet werden.

5. Verfahren nach einem der vorangehenden Ansprüche,
**dadurch gekennzeichnet,**
**dass** Radarsensoren (2) verwendet werden, die vor der Konfiguration alle gleich ausgebildet sind.

6. Kraftfahrzeug (1), umfassend ein Radarsystem mit mehreren Radarsensoren (2), die an unterschiedlichen Einbaupositionen in dem Kraftfahrzeug (1) verbaut sind, und einem Steuergerät (7), das zur Durchführung eines Verfahrens nach einem der vorangehenden Ansprüche ausgebildet ist.

## Claims

1. Method for operating radar sensors (2) in a motor vehicle (1), wherein the radar sensors (2) are installed in different installation positions in the motor vehicle (1),
**characterised in that**
after the installation of a radar sensor (2) in an installation position, configuration information comprising an operating software and/or configuration parameters is transmitted by a central control device (7) communicating with the radar sensors (2) to the radar sensor (2) and is used there for configuring the radar sensor (2), after which the radar sensor (2) is operated according to the configuration information, wherein as configuration information operating parameters are used describing adjustments of the measurement process relating to the installation surroundings, wherein operating parameters are used which take into consideration properties of a component (15) of the motor vehicle (1) to be penetrated with radiation during the measuring process and/or detected by secondary radar lobes, wherein as operating parameters at least one evaluation parameter describing a detection threshold and/or at least one tracking parameter related to tracking an object and/or at least one misalignment parameter related to monitoring a misalignment and/or at least one evaluation parameter related to a rapid Fourier transformation and/or at least one transmitting parameter describing the number of chirps and/or the frequency bandwidth are used.

2. Method according to claim 1,
**characterised in that**
the radar sensors (2) are installed at least partly behind a component of the motor vehicle (1) to be penetrated by radiation, in particular in a bumper (4, 5) or in a door (6) and/or the in particular eight radar sensors (2) are part of a radar system detecting the surrounding area of the motor vehicle (1) in a 360° angle range.

3. Method according to claim 1 or 2,
**characterised in that**
the configuration information comprises calibration data, in particular relating to the installation position and/or a transformation between a coordinate system of the radar sensor (2) and a coordinate system of the motor vehicle (1).

4. Method according to any of the preceding claims,
**characterised in that**
operating parameters are used describing the desired detection range (3) at the installation position.

5. Method according to any of the preceding claims,
**characterised in that**
radar sensors (2) are used which are all designed to be identical before the configuration.

6. Motor vehicle (1), comprising a radar system with a plurality of radar sensors (2), which are installed in different installation positions in the motor vehicle (1), and a control device (7), which is designed for performing a method according to any of the preceding claims.

## Revendications

1. Procédé pour mettre en service des capteurs radar (2) dans un véhicule à moteur (1), dans lequel les capteurs radar (2) sont montés à différentes positions de montage dans le véhicule à moteur (1) ;
**caractérisé en ce qu'**
après le montage d'un capteur radar (2) à une position de montage, un logiciel de mise en service et/ou des informations de configuration comprenant des paramètres de configuration d'un dispositif de commande (7) central communiquant avec les capteurs radar (2) est/sont transmis(es) au capteur radar (2) et y est/sont utilisé(es) pour la configuration du capteur radar (2), à la suite de quoi le capteur radar (2) est mis en service selon les informations de configuration, dans lequel les paramètres de fonctionnement décrivant les adaptations du processus de mesure concernant l'environnement de montage sont utilisés comme informations de configuration, dans lequel des paramètres de mise en service prenant en compte des caractéristiques d'un composant (15) à rayonner et/ou saisi par des lobes radar secondaires pendant le processus de mesure du véhicule à moteur (1) sont utilisés, dans lequel au moins un paramètre d'évaluation décrivant un seuil de détection et/ou au moins un paramètre de suivi concernant un suivi d'un objet et/ou au moins un paramètre de désajustement concernant un contrôle d'un désajustement et/ou au moins un paramètre d'évaluation concernant une transformation rapide de Fourier et/ou au moins un paramètre d'émission décrivant le nombre de fréquences parasites et/ou la bande de fréquence sont utilisés comme paramètre de mise de service.

2. Procédé selon la revendication 1, **caractérisé en ce que**
les capteurs radar (2) sont montés au moins partiellement derrière un composant à rayonner du véhicule à moteur (1), en particulier dans un pare-chocs (4, 5) ou dans une porte (6), et/ou les en particulier huit capteurs radar (2) font partie d'un système radar saisissant l'environnement du véhicule à moteur (1) dans une zone angulaire de 360°.

3. Procédé selon la revendication 1 ou 2,
**caractérisé en ce que**
les informations de configuration comprennent des données d'étalonnage, en particulier concernant la position de montage et/ou une transformation entre un système de coordonnées du capteur radar (2) et un système de coordonnées du véhicule à moteur (1).

4. Procédé selon l'une quelconque des revendications précédentes,
**caractérisé en ce que**
des paramètres de mise en service décrivant la zone de détection souhaitée (3) à la position de montage sont utilisés.

5. Procédé selon l'une quelconque des revendications précédentes,
**caractérisé en ce que**
des capteurs radar (2) sont utilisés, qui sont tous réalisés de manière identique avant la configuration.

6. Véhicule à moteur (1), comprenant un système radar avec plusieurs capteurs radar (2), qui sont montés à différentes positions de montage dans le véhicule à moteur (1), et un dispositif de commande (7), qui est réalisé pour effectuer un procédé selon l'une quelconque des revendications précédentes.
